# EUROPEAN PATENT APPLICATION

(11) **EP 3 486 000 A1**
(43) Date of publication of application: **22.05.2019**
(21) Application number: 17827577.2
(22) Date of filing: 10.07.2017
(51) Int. Cl.: B21K 1/05, B21J 9/02, B60B 35/14, B60B 35/18, F16C 19/18, F16C 35/063

(54) **METHOD AND APPARATUS FOR MANUFACTURING BEARING UNIT FOR SUPPORTING WHEEL AND METHOD FOR MANUFACTURING VEHICLE**

(30) Priority: 12.07.2016 JP 2016137709
(71) Applicant: NSK Ltd., Tokyo 141-8560 (JP)
(72) Inventor: HAGIWARA Nobuyuki, Fujisawa-shi Kanagawa 251-8501 (JP); ISHIMORI Yasuhiro, Fujisawa-shi Kanagawa 251-8501 (JP); KATOU Hiroshi, Fujisawa-shi Kanagawa 251-8501 (JP)
(74) Representative: Grünecker Patent- und Rechtsanwälte PartG mbB
(86) International application number: PCT/JP2017/025101
(87) International publication number: WO 2018/012450

(57) **Abstract**

Rotary forging for forming a hub-side face spline is started in a state in which a caulking section (18) is made to come in contact with a flat surface section (30) that is an inner end surface of an inner ring in an axial direction and a chamfer (31). In addition, a contact portion (P) between an inner end surface of the caulking section (18) in the axial direction and a processing surface (35) of a roll (32) at the beginning of the rotary forging overlaps a contact portion between the caulking section (18) and the flat surface section (30) and the chamfer (31) of the inner ring (9) in the axial direction.

## Description

### [Technical Field]

The present invention relates to a method and an apparatus for manufacturing a wheel supporting bearing unit, and a method of manufacturing a vehicle.

Priority is claimed on Japanese Patent Application No. 2016-137709, filed July 12, 2016, the content of which is incorporated herein by reference.

### [Background Art]

Patent Document 1 discloses a bearing unit in which a face spline for power transmission is formed on an end surface of an inner ring. In the related art, a swing press apparatus (a rotary pressing machine, a rotary forging machine) is used in processing of a face spline.

### [Citation List]

### [Patent Document]

[Patent Document 1] Japanese Unexamined Patent Application, First Publication No. 2009-292422

### [Summary of Invention]

### [Technical Problem]

An aspect of the present invention is to provide a method and an apparatus for manufacturing a wheel supporting bearing unit, and a method of manufacturing a vehicle, which are capable of efficiently forming a hub-side face spline on an inner end surface of a caulking section in an axial direction through rotary forging.

### [Solution to Problem]

In an aspect of the present invention, a wheel supporting bearing unit that is a target of a manufacturing method includes a hub main body configured to support and fix a wheel, and an inner ring fitted on the hub main body. The hub main body has a caulking section formed by plastically deforming a cylindrical portion formed on an inner end portion of the caulking section in an axial direction outward in a radial direction, and a hub-side face spline that is a concavo-convex section in a circumferential direction formed on an inner end surface of the caulking section in the axial direction. In addition, the inner ring has an inner end surface in the axial direction that is a flat surface section perpendicular to a central axis, the flat surface section and an inner circumferential surface of the inner ring are continuous with each other via a chamfer, and the caulking section comes in contact with the flat surface section and the chamfer. In a method of manufacturing the wheel supporting bearing unit, after forming the caulking section, the roll is rotated (revolved) about a central axis of the hub main body in a state in which a processing surface, that is a concavo-convex surface in a circumferential direction, formed on a tip surface of a roll (a mold) in the axial direction having a central axis inclined with respect to the central axis of the hub main body is pressed against the inner end surface of the caulking section in the axial direction, and the hub-side face spline is formed on the inner end surface of the caulking section in the axial direction by performing rotary forging of freely rotating (self rotating) the roll about a central axis of the roll on the basis of engagement between the processing surface of the roll and the inner end surface of the caulking section in the axial direction. In the manufacturing method, the rotary forging is started in a state in which the caulking section is made to come in contact with the flat surface section and the chamfer of the inner ring, and a contact portion between the inner end surface of the caulking section in the axial direction and the processing surface of the roll at the beginning of the rotary forging is made to overlap a contact portion between the caulking section and the flat surface section and the chamfer of the inner ring in the axial direction. Further, an aspect in which the contact portion between the caulking section and the flat surface section and the chamfer of the inner ring overlaps the contact portion at the beginning of the rotary forging between the inner end surface of the caulking section in the axial direction and the processing surface of the roll in the axial direction includes not only an aspect in which "the entirety" of the contact portion at the beginning of the rotary forging between the inner end surface of the caulking section in the axial direction and the processing surface of the roll overlaps the contact portion between the caulking section and the flat surface section and the chamfer of the inner ring in the axial direction but also an aspect in which "a portion" thereof overlaps the contract portion in the axial direction {i.e., an aspect in which a portion of the contact portion at the beginning of the rotary forging between the inner end surface of the caulking section in the axial direction and the processing surface of the roll is disposed further outward in the radial direction than the inner circumferential surface of the inner ring, and the remainder is disposed further inward in the radial direction than the inner circumferential surface of the inner ring}.

In the example, a relation established between an initial caulking section thickness that is a thickness in the axial direction of a portion of the caulking section disposed further inward in the axial direction than the flat surface section of the inner ring before the start of the rotary forging and a tooth depth of the hub-side face spline after termination of the rotary forging may be previously examined under a condition in which a relative displacement (pressing stroke of the rotary forging) of the hub main body in the axial direction between the hub main body and the roll from the start to the termination of the rotary forging is set as a predetermined value, and when the rotary forging is performed under the condition, the initial caulking section thickness that is needed to form the hub-side face spline having a desired tooth depth may be determined using the relation.

In another aspect of the present invention, there is provided a method of manufacturing a wheel supporting bearing unit, including: a process of setting a hub main body on which an inner ring is fitted on a swing press mechanism; a process of forming a caulking section on an end portion of the hub main body in an axial direction by a press using a first surface such that the hub main body is caulked with respect to the inner ring; and a process of forming a face spline on the end portion of the hub main body on which the caulking section is formed by a swing press using a second surface, wherein a press position at which the second surface first comes in contact with the hub main body is disposed further outward in a radial direction than an inner circumferential surface of the inner ring.

In another aspect of the present invention, there is provided a method of manufacturing a vehicle, including a process of manufacturing a wheel supporting bearing unit using the manufacturing method.

In still another aspect of the present invention, there is provided an apparatus for manufacturing a wheel supporting bearing unit, including: a first surface for caulking; a second surface having teeth for processing a face spline; and a swing press mechanism having a first mode of forming a caulking section on an end portion of a hub main body in an axial direction by a press using the first surface such that the hub main body on which an inner ring is fitted is caulked with respect to the inner ring, and a second mode of forming a face spline on the end portion of the hub main body on which the caulking section is formed by a swing press using the second surface, wherein a press position at which the second surface first comes in contact with the hub main body is disposed further outward in the radial direction than the inner circumferential surface of the inner ring.

### [Advantageous Effects of Invention]

According to the aspect of the present invention, the hub-side face spline can be efficiently formed on the inner end surface of the caulking section in the axial direction by the rotary forging. In the example, the rotary forging is started in a state in which the caulking section comes in contact with the flat surface section that is the inner end surface of the inner ring in the axial direction and the chamfer adjacent to the inner side in the radial direction. For this reason, occurrence of inconvenience that some of the pressing force of the processing surface of the roll applied to the inner end surface of the caulking section in the axial direction is consumed to eliminate a gap, as in the case in which the rotary forging is started in a state in which a gap is formed between the caulking section and the flat surface section or the chamfer of the inner ring, can be prevented. Therefore, that being the case, the convex section that constitutes the processing surface of the roll can easily bite into the inner end surface of the caulking section in the axial direction, and the hub-side face spline can be efficiently formed. In addition, in the example, the contact portion at the beginning of the rotary forging between the inner end surface of the caulking section in the axial direction and the processing surface of the roll overlaps the contact portion between the caulking section and the flat surface section and the chamfer of the inner ring in the axial direction. For this reason, the pressing force of the processing surface of the roll applied to the inner end surface of the caulking section in the axial direction can be efficiently received by the inner ring from the start of the rotary forging. Accordingly, the convex section that constitutes the processing surface of the roll can easily bite into the inner end surface of the caulking section in the axial direction from the start of the rotary forging, and the hub-side face spline can be efficiently formed.

### [Brief Description of Drawings]

Fig. 1 is a major part cross-sectional view showing a starting state of work in which rotary forging for forming a hub-side face spline is performed on an inner end surface of a caulking section in the axial direction, according to a first example of an embodiment of the present invention.
Fig. 2 is a flowchart showing an example of a method of manufacturing a wheel supporting bearing unit.
Fig. 3 is an enlarged view showing an example of a portion a in Fig. 1.
Fig. 4 is an enlarged view showing another example of the portion a in Fig. 1.
Fig. 5 shows Comparative example 1 in part (A) and Comparative example 2 in part (B).
Fig. 6 is a diagram showing a relation between an initial caulking section thickness that is a thickness of a caulking section in an axial direction before rotary forging for forming a hub-side face spline is started and a tooth depth of a hub-side face spline after the rotary forging is terminated, according to a third example of the embodiment of the present invention.
Fig. 7 is a graph showing results of an experiment.
Fig. 8 is a cross-sectional view showing an example of a wheel driving bearing unit into which a wheel supporting bearing unit is incorporated.

### [Description of Embodiments]

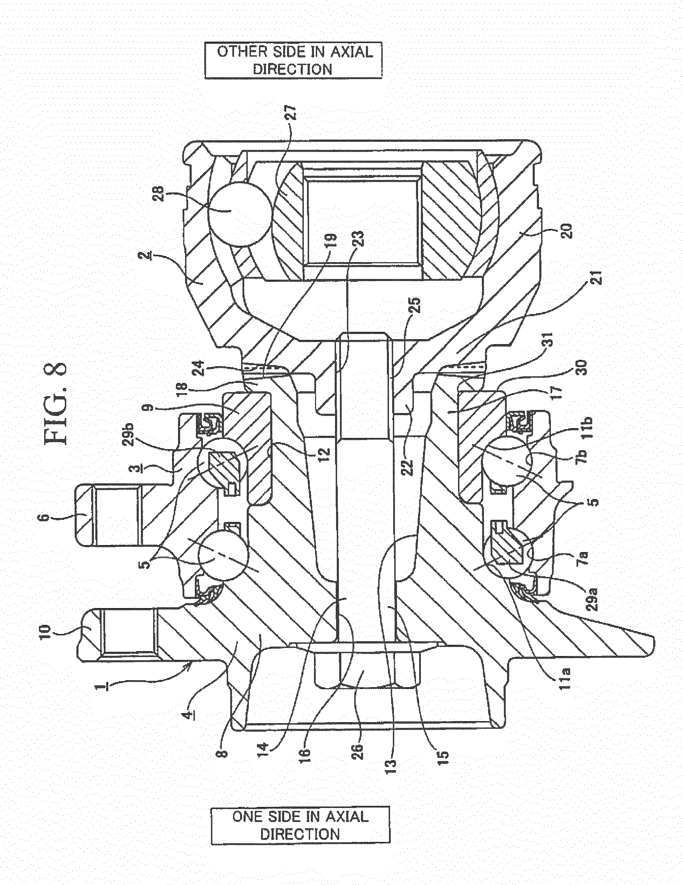

Fig. 8 shows an example of a wheel supporting rolling bearing unit (a wheel supporting bearing unit) disclosed in Patent Document 1. The wheel driving bearing unit shown in Fig. 8 includes a wheel supporting rolling bearing unit 1, and an outer ring 2 for a constant velocity joint.

The wheel supporting rolling bearing unit 1 includes an outer ring 3, a hub 4, and a plurality of rolling elements 5 and 5. The outer ring 3 is formed of medium and high carbon steel such as S53C or the like. The outer ring 3 has a standstill-side flange 6 formed on an outer circumferential surface thereof, and a plurality of rows of outer ring tracks 7a and 7b formed on an inner circumferential surface thereof. The hub 4 is formed by assembling a hub main body 8 and an inner ring 9 together. The hub main body 8 has a rotation-side flange 10 formed at a portion of the outer circumferential surface close to an outer end in the axial direction. The hub main body 8 has an inner ring track 11a formed on an outer side in the axial direction on an intermediate section in the axial direction, and a small diameter step section 12 formed on an inner end portion in the axial direction. In addition, the hub main body 8 has a center hole 13 in the axial direction formed on a central section in the radial direction. A small diameter section 16 through which a rod section 15 of a bolt 14 serving as a coupling member can be inserted via a predetermined guide gap is present in an outer end portion of the center hole 13 in the axial direction. The hub main body 4 is formed of medium and high carbon steel such as S53C or the like.

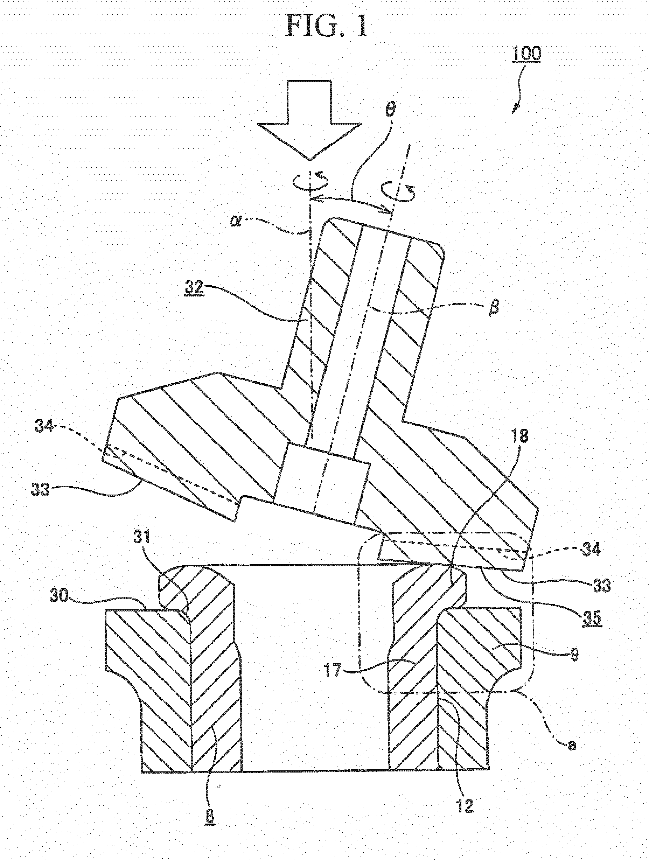

Further, "an outer side (a first side) in the axial direction is referred to as an outer side of a vehicle in a widthwise direction in a state in which the bearing unit is assembled to an automobile, and one side in the axial direction in Fig. 8 is referred to as a lower side in Figs. 1 and 3 to 5. A central side of the vehicle in a state in which the bearing unit is assembled to the automobile is referred to as the other side in the axial direction in Fig. 8, and an upper side in Figs. 1 and 3 to 5 is referred to as "an inner side (a second side) in the axial direction.

The inner ring 9 has an inner ring track 11b formed on an outer circumferential surface on the inner side in the axial direction. The inner ring 9 has a flat surface section 30 in which an inner end surface in the axial direction has an annular shape perpendicular to a central axis thereof. In the inner ring 9, the flat surface section 30 and the inner circumferential surface having a cylindrical surface shape arc connected via a chamfer 31 having an arc-shaped cross section. The inner ring 9 is fastened and fitted onto the small diameter step section 12 of the hub main body 8. In addition, the inner ring 9 is formed of bearing steel such as SUJ2 or the like.

The rolling elements 5 and 5 are rollably installed between both of the outer ring tracks 7a and 7b and both of the inner ring tracks 11a and 11b such that a plurality of rolling elements 5 and 5 are installed in each of the rows. The rolling elements 5 and 5 are formed of bearing steel such as SUJ2 or the like. Further, in the example shown, while balls are used as the rolling elements 5 and 5, in the case of a wheel supporting rolling bearing unit for a heavy-weight automobile, a tapered roller may be used.

In addition, in this state, a caulking section 18 is formed by plastically deforming a portion of a cylindrical portion 17, formed on an inner end portion of the hub main body 8 in the axial direction, protruding from an inner end opening of the inner ring 9 in the axial direction outward in the radial direction. The inner end surface (the flat surface section 30) of the inner ring 9 in the axial direction and the chamfer 31 are pressed down by the caulking section 18, and displacement of the inner ring 9 with respect to the hub main body 8 on an inner side in the axial direction can be prevented. In addition, a hub-side face spline 19 that is a concavo-convex section in the circumferential direction is formed on an inner end surface of the caulking section 18 in the axial direction throughout the circumference.

The outer ring 2 for a constant velocity joint has a cup-shaped mouth section 20, an end wall section 21 that is a bottom section of the mouth section 20, and a cylindrical shaft section 22 extending outward from a central section of the end wall section 21 in the axial direction. In addition, a female screw section 23 is formed in an inner circumferential surface of the shaft section 22. In addition, a joint-side face spline 24 that is a concavo-convex section in the circumferential direction is formed on a portion close to an outer circumference of an outer end surface of the end wall section 21 in the axial direction throughout the circumference.

As both of the hub-side and joint-side face splines 19 and 24 mesh with each other in a state in which central axes of the hub main body 8 and the outer ring 2 for a constant velocity joint coincide with each other, transmission of a rotating force between the hub main body 8 and the outer ring 2 for a constant velocity joint becomes possible. In addition, in this state, the rod section 15 of the bolt 14 is inserted through the small diameter section 16 of the center hole 13 of the hub main body 8 from the outer side in the axial direction, and a male screw section 25 formed on a tip portion of the rod section 15 is screwed and also fastened into the female screw section 23. Accordingly, in a state in which the hub main body 8 is sandwiched between a head section 26 of the bolt 14 and the outer ring 2 for a constant velocity joint, the hub main body 8 and the outer ring 2 for a constant velocity joint are coupled and fixed to each other.

When the wheel driving bearing unit as configured above is assembled to the vehicle, the standstill-side flange 6 of the outer ring 3 is coupled and fixed to a suspension system, and a rotary member for a brake such as a wheel, a disk, and so on, is supported and fixed by the rotation-side flange 10 of the hub main body 8. In addition, a tip portion of a drive shaft (not shown) driven to be rotated by an engine via a transmission is spline-coupled to an inside of an inner ring 27 for a constant velocity joint inside the outer ring 2 for a constant velocity joint. During traveling of the automobile, rotation of the inner ring 27 for a constant velocity joint is transmitted to the outer ring 2 for a constant velocity joint and the hub main body 8 via a plurality of balls 28 to rotate and drive the wheels.

When the wheel supporting rolling bearing unit 1 that constitutes the wheel driving bearing unit configured as above is assembled, first, the outer ring 3 is disposed around the hub main body 8, and the rolling elements 5 and 5 are held between the outer ring track 7a on the outer side in the axial direction of the two outer ring tracks 7a and 7b and the inner ring track 11a on the outer side in the axial direction by a cage 29a on the outer side in the axial direction. After that, the rolling elements 5 and 5 are installed around the inner ring track 11b on the inner side in the axial direction formed on the outer circumferential surface of the inner ring 9 while being held by a cage 29b on the inner side in the axial direction. In this state, the inner ring 9 is fastened and fitted onto the small diameter step section 12 formed on the inner end portion of the hub main body 8 in the axial direction (a portion close to the inner end of the hub main body 8 in the axial direction). According to this fitting on work, rolling surfaces of the rolling elements 5 and 5 (of an inner side row in the axial direction) held by the cage 29b on the inner side in the axial direction abut the outer ring track 7b on the inner side in the axial direction formed in the inner circumferential surface of the portion close to the inner end of the outer ring 3 in the axial direction. After that, the caulking section 18 is formed by plastically deforming the portion of the cylindrical portion 17, formed on the inner end portion of the hub main body 8 in the axial direction, protruding from the inner end opening of the inner ring 9 in the axial direction outward in the radial direction.

After that, the hub-side face spline 19 is formed by performing rotary forging on the inner end surface of the caulking section 18 in the axial direction using a roll 32 (see Fig. 1 showing the first example of the embodiment) that is a mold. Here, rotary forging refers a process from contact between the inner end surface of the caulking section 18 in the axial direction and the processing surface of the roll 32 till completion of formation (plastic working) of the hub-side face spline 19. In order to perform the rotary forging, described above specifically, a processing surface 35 (that is a concavo-convex surface in the circumferential direction) formed by alternately disposing convex sections (processing teeth) 33 and 33 and concave sections 34 and 34 in the circumferential direction is formed on a tip surface (a lower end surface in Fig. 1) of the roll 32. Then, in a state in which a central axis β of the roll 32 is inclined with respect to a central axis α of the hub main body 8 by a predetermined angle θ and the processing surface 35 is pressed against the inner end surface of the caulking section 18 in the axial direction, the roll 32 is rotated (revolves) about the central axis α of the hub main body 8. Here, the roll 32 is rotatably (self rotatably) supported about the central axis β thereof. For this reason, when the roll 32 is rotated (revolved) about the central axis α of the hub main body 8 as described above, the roll 32 is rotated (self rotated) about the central axis β thereof on the basis of engagement between the processing surface 35 and the inner end surface of the caulking section 18 in the axial direction. As a result, as the convex sections 33 and 33 that constitute the processing surface 35 gradually bite into the inner end surface of the caulking section 18 in the axial direction, the hub-side face spline 19 that is a concavo-convex surface in the circumferential direction is formed on the inner end surface of the caulking section 18 in the axial direction.

Incidentally, from a viewpoint of reduction in manufacturing costs or improvement of quality of the wheel supporting rolling bearing unit 1, it is preferable that the hub-side face spline 19 can be efficiently formed on the inner end surface of the caulking section 18 in the axial direction by the above-mentioned rotary forging. Specifically, it is preferable that, for example, a tooth depth of the hub-side face spline 19 (a height of a tooth with reference to a groove bottom surface) can be increased when rotary forging is performed under a condition in which a processing stroke of the rotary forging has a predetermined value when an increased proportion of the pressing force of the processing surface 35 of the roll 32 applied to the inner end surface of the caulking section 18 in the axial direction contributes to formation of the hub-side face spline 19. Here, the processing stroke of the rotary forging refers a relative displacement between the hub main body 8 and the roll 32 in the axial direction of the hub main body 8 from the beginning of the rotary forging (contact between the inner end surface of the caulking section 18 in the axial direction and the processing surface 35 of the roll 32) to termination thereof (formation of the hub-side face spline 19 is completed).

### [First example of embodiment]

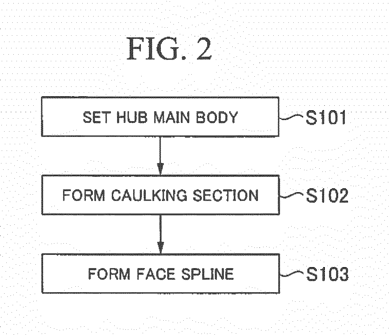

A first example of the embodiment will be described with reference to Figs. 1 to 4. In the example, as shown in Fig. 2, a method of manufacturing a wheel supporting rolling bearing unit (a wheel supporting bearing unit) includes a first process (S101) of setting the hub main body 8 onto which the inner ring 9 is fitted on a swing press mechanism 100, a second process (S102) of forming a caulking section (a clinched portion) 18 on an end portion of the hub main body 8 in the axial direction by a press using a first surface (a first processing surface, a first molding surface, a caulking member, a first member) 45 such that the hub main body 8 is caulked with respect to the inner ring 9, and a third process (S103) of forming the face spline 19 on an end portion of the hub main body 8 on which the caulking section 18 is formed by a swing press using a second surface (a second processing surface, a second molding surface, a processing member, a processing teeth, a second member) 35 that is different from the first surface 45. In the swing press of the second process (S102), a press position P at which the second surface 35 first comes in contact with the hub main body 8 (the caulking section 18) is disposed on the outer side of an inner circumferential surface 41 of the inner ring 9 in the radial direction. In the example, after the caulking section 18 is formed on the inner end portion of the hub main body 8 in the axial direction, the hub-side face spline 19 that is a concavo-convex surface in the circumferential direction is formed on the inner end surface of the caulking section 18 in the axial direction by the rotary forging using the roll 32 that is a mold. A basic structure of the wheel supporting rolling bearing unit 1 that is a manufacturing target is the same as that shown in Fig. 8 described as above. In addition, since a sequence or the like of manufacturing members that constitute the wheel supporting rolling bearing unit 1 by performing plastic working such as forging or the like, cutting such as lathe turning or the like, and finishing such as polishing or the like on a metal material is the same as in the method of manufacturing wheel supporting rolling bearing units widely known in the related art, description thereof will be omitted.

In the example, when the wheel supporting rolling bearing unit 1 is assembled, like the case of the above-mentioned manufacturing method, the outer ring 3 is disposed around the hub main body 8 (see Fig. 8), and the plurality of rolling elements 5 and 5 are installed between the outer ring track 7a on the outer side in the axial direction and the inner ring track 11a on the outer side in the axial direction while being held by the cage 29a on the outer side in the axial direction. After that, the rolling elements 5 and 5 are installed around the inner ring track 11b on the inner side in the axial direction formed on the outer circumferential surface of the inner ring 9 while being held by the cage 29b on the inner side in the axial direction, and in this state, the inner ring 9 is fastened and fitted onto the small diameter step section 12 (a portion close to the inner end of the hub main body 8 in the axial direction) formed on the inner end portion of the hub main body 8 in the axial direction. Then, according to this fitting on work, the rolling surfaces of the rolling elements 5 and 5 of the inner side row in the axial direction abut the outer ring track 7b on the inner side in the axial direction formed on the inner circumferential surface of the portion close to the inner end of the outer ring 3 in the axial direction. After that, the caulking section 18 is formed by plastically deforming the portion of the cylindrical portion 17, formed on the inner end portion of the hub main body 8 in the axial direction, protruding from the inner end opening of the inner ring 9 in the axial direction outward in the radial direction by the rotary forging using, for example, the first surface (the caulking member, the first member) 45 configured to form the caulking section.

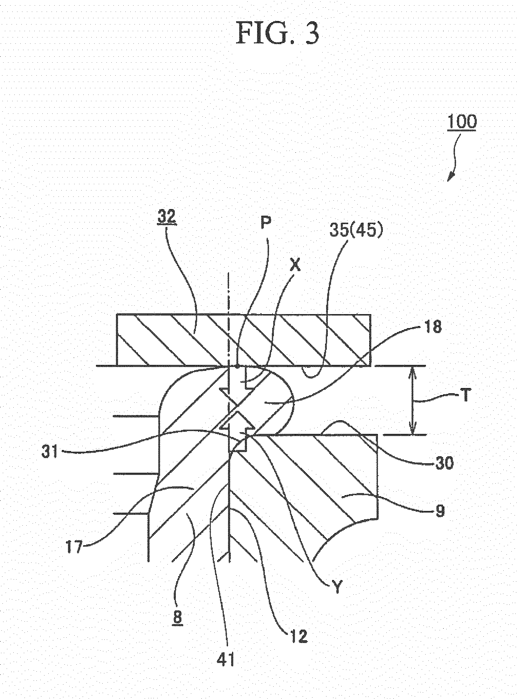

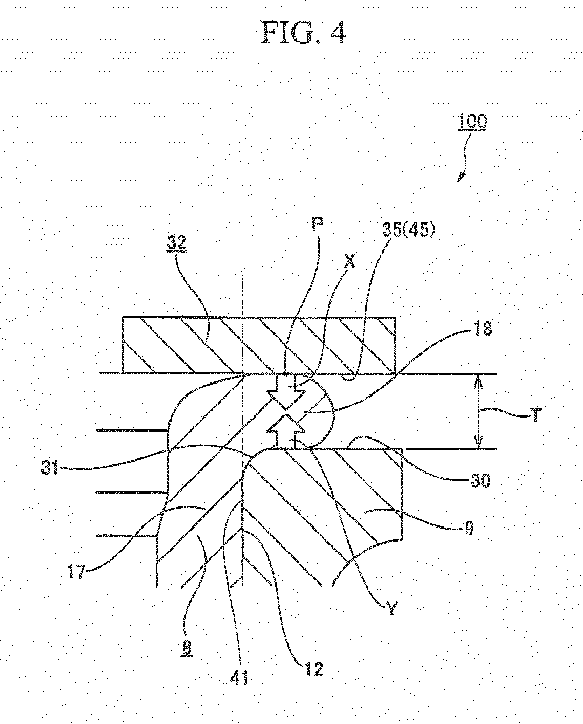

In particular, in the case of the example, in a state in which the caulking section 18 is formed in this way, as shown in Fig. 3 or Fig. 4, the caulking section 18 comes in contact with (sits on) the flat surface section 30 that is the inner end surface of the inner ring 9 in the axial direction and the chamfer 31 formed adjacent to the inside of the flat surface section 30 in the radial direction. Further, as described above, the flat surface section 30 is an annular plane perpendicular to the central axis of the inner ring 9 (and the hub main body 8). In addition, the chamfer 31 is an annular convex curved surface having an arc-shaped cross section configured to connect the flat surface section 30 and a cylindrical inner circumferential surface of the inner ring 9 and is inclined outward in the axial direction as it goes inward in the radial direction.

In the case of the example, after that, as shown in Figs. 1 and 3 or 4, the hub-side face spline 19 (see Fig. 8) is formed by performing rotary forging on the inner end surface of the caulking section 18 in the axial direction using the roll 32. Further, Fig. 1 shows only the roll 32 for performing the rotary forging in the apparatus (an apparatus for manufacturing a bearing unit, and the swing press mechanism 100), and shows only the inner end portion of the hub main body 8 in the axial direction and the portion close to the inner end and the inner ring 9 in the wheel supporting rolling bearing unit 1 that is a manufacturing target while illustration of other portions is omitted. In the example, the apparatus for manufacturing the bearing unit includes the first surface (the caulking member, the first member) 45 for caulking, the second surface (the processing member, the processing teeth, the second member) 35 having teeth for processing the face spline, and the swing press mechanism 100. In the example, after processing using the first surface 45, the first surface 45 is substituted with the second surface 35. The swing press mechanism 100 has a first mode of forming the caulking section 18 on the end portion of the hub main body 8 in the axial direction by a press using the first surface 45 and a second mode of forming the face spline on the end portion of the hub main body on which the caulking section 18 is formed by a swing press using the second surface 35 such that the hub main body 8 on which the inner ring 9 is fitted is caulked with respect to the inner ring 8. In addition, the apparatus for manufacturing the bearing unit (the swing press mechanism 100) includes a first driving apparatus, a second driving apparatus, and a controller (that are not shown). The first driving apparatus is configured to drive the roll 32 such that the roll 32 is pressed relative to the hub main body (the inner ring) 8 in a state in which the central axis β of the roll 32 is inclined with respect to the first axis α. The second driving apparatus is configured to perform relative movement between the hub main body 8 and the roll 32 such as movement of the roll 32 around the central axis α in parallel with relative pressing. The controller includes a circuit and is configured to generally control the apparatus as a whole.

In the case of the example, in order to form the hub-side face spline 19, specifically, the processing surface 35 (that is a concavo-convex surface in the circumferential direction) formed by alternately disposing the convex sections (processing teeth) 33 and 33 and the concave sections 34 and 34 in the circumferential direction is formed on the tip surface of the roll 32 (the lower end surface in Fig. 1). Then, as shown in Fig. 1, in a state in which the central axis β of the roll 32 is inclined with respect to the central axis α of the hub main body 8 by the predetermined angle θ and the processing surface 35 is pressed against the inner end surface of the caulking section 18 in the axial direction, the roll 32 is rotated (revolved) about the central axis α of the hub main body 8. Here, the roll 32 is supported to be freely rotatable (self rotatable) about the central axis β thereof. For this reason, when the roll 32 is rotated (revolved) about the central axis α of the hub main body 8 in this way, the roll 32 is freely rotated (self rotated) about the central axis β thereof on the basis of engagement between the processing surface 35 and the inner end surface of the caulking section 18 in the axial direction. As a result, as the convex sections 33 and 33 that constitute the processing surface 35 gradually bite into the inner end surface of the caulking section 18 in the axial direction, the hub-side face spline 19 is formed on the inner end surface of the caulking section 18 in the axial direction.

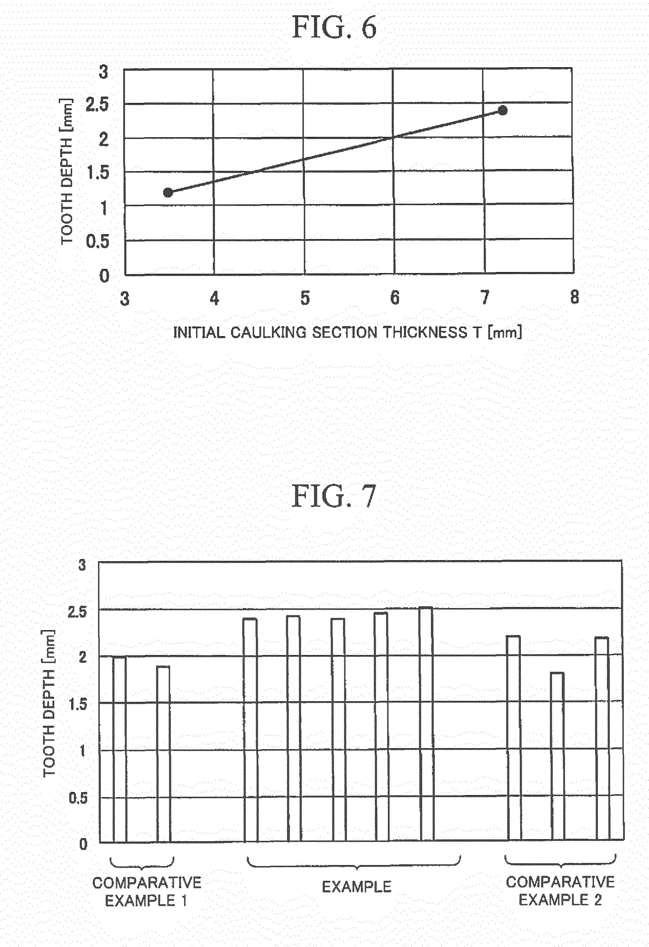

In particular, in the example, for example, as shown in Fig. 3 or 4, a contact portion P between the inner end surface of the caulking section 18 in the axial direction and the processing surface 35 of the roll 32 at the beginning of the rotary forging is made to overlap a contact portion between the caulking section 18 and the flat surface section 30 and the chamfer 31 of the inner ring 9 in the axial direction. The press position at which the processing surface (the second surface) 35 first comes in contact with the hub main body 8 (the caulking section 18) is disposed further outward in the radial direction than the inner circumferential surface 41 of the inner ring 9. Further, Fig. 3 shows the case in which the contact portion P is made to overlap a portion of the contact portion, which is between the caulking section 18 and the flat surface section 30 and the chamfer 31, corresponding to the chamfer 31 in the axial direction. Fig. 4 shows the case in which the contact portion P is made to overlap the portion corresponding to the flat surface section 30 in the axial direction. Here, an aspect in which the contact portion P at the beginning of the rotary forging is made to overlap the contact portion between the caulking section 18 and the flat surface section 30 and the chamfer 31 in the axial direction includes not only an aspect in which "the entirety" of the contact portion P at the beginning of the rotary forging is made to overlap the contact portion between the caulking section 18 and the flat surface section 30 and the chamfer 31 in the axial direction but also an aspect in which "a portion" of the contact portion P is made to overlap the contact portion in the axial direction (i.e., an aspect in which a portion of the contact portion P at the beginning of the rotary forging is disposed further outward in the radial direction than the inner circumferential surface of the inner ring 9, and the remainder is disposed further inward in the radial direction than the inner circumferential surface of the inner ring 9) {for example, the same aspect is included in the first example (Fig. 3) or the following example (Fig. 7) of the embodiment). In any case, in the case of the example, since the contact portion P at the beginning of the rotary forging is made to overlap the contact portion between the caulking section 18 and the flat surface section 30 and the chamfer 31 in the axial direction, for example, in consideration of the inclination angle of the portion (the lower end portion) of the processing surface 35 pressed against the inner end surface of the caulking section 18 in the axial direction, a shape (a profile (a contour)) of the inner end surface of the caulking section 18 in the axial direction before performing the rotary forging is restricted. For example, the process of forming the caulking section 18 may include a process of restricting/controlling the profile of the caulking section 18 on the basis of a position and/or a posture (a height, an inclination angle, or the like) of the processing surface 35 during processing of the face spline such that the press position at which the processing surface (the second surface) 35 during processing of the face spline first comes in contact with the hub main body 8 (the caulking section 18) is disposed further outward in the radial direction than the inner circumferential surface 41 of the inner ring 9. Such restriction may be performed by, for example, devising a shape of a mold for forming the caulking section 18 through plastic working or performing finishing such as cutting performed after forming the caulking section 18 through plastic working. For example, in pressing for forming the caulking section 18, the profile of the caulking section 18 has a convex shape (a protrusion), and a profile of the caulking section 18 is restricted/controlled such that an apex of the convex shape is disposed further outward in the radial direction than the inner circumferential surface 41 of the inner ring 9. Alternatively, in cutting after the pressing for forming the caulking section 18, the profile of the caulking section 18 has a convex shape (a protrusion), and the profile of the caulking section 18 is restricted/controlled such that an apex of the convex shape is disposed further outward in the radial direction than the inner circumferential surface 41 of the inner ring 9.

According to the method of manufacturing the wheel supporting rolling bearing unit of the above-mentioned example, the hub-side face spline 19 can be efficiently formed on the inner end surface of the caulking section 18 in the axial direction by rotary forging. For example, a tooth depth of the hub-side face spline 19 (a height of a tooth with reference to the groove bottom surface) when the rotary forging is performed under a condition in which the processing stroke of the rotary forging (a relative displacement between the hub main body 8 and the roll 32 in the axial direction of the hub main body 8 from starting to termination of the rotary forging) is a predetermined value can be increased.

The reasons why the hub-side face spline 19 can be efficiently formed by the manufacturing method of the example in this way will be described below in detail.

First, in the example, the rotary forging is started in a state in which the caulking section 18 is made to come in contact with the flat surface section 30 that is the inner end surface of the inner ring 9 in the axial direction and the chamfer 31 adjacent to the inner side in the radial direction. For this reason, occurrence of inconvenience that the convex sections 33 and 33 that constitute the processing surface 35 of the roll 32 cannot easily bite the inner end surface of the caulking section 18 in the axial direction, as in the case in which the rotary forging is started in a state in which a gap is formed between the caulking section 18 and the flat surface section 30 or the chamfer 31 of the inner ring 9, and in the meantime some of the pressing force (a force shown by an arrow X in Figs. 3 and 4) of the processing surface 35 of the roll 32 applied to the inner end surface of the caulking section 18 in the axial direction is consumed to eliminate the gap, can be prevented without occurrence of large stress on the portion of the inner end surface of the caulking section 18 in the axial direction against which the processing surface 35 of the roll 32 is pressed. Accordingly, in the case of the example, it is possible to make the convex sections 33 and 33 that constitute the processing surface 35 of the roll 32 easily bite the inner end surface of the caulking section 18 in the axial direction, and it is possible to efficiently form the hub-side face spline 19.

In addition, in the example, the contact portion P between the inner end surface of the caulking section 18 in the axial direction and the processing surface 35 of the roll 32 at the beginning of the rotary forging is made to overlap the contact portion between the caulking section 18 and the flat surface section 30 and the chamfer 31 of the inner ring 9 in the axial direction. The press position at which the processing surface (the second surface) 35 first comes in contact with the hub main body 8 (the caulking section 18) is disposed further outward in the radial direction than the inner circumferential surface 41 of the inner ring 9. For this reason, the pressing force (a force shown by an arrow X in Figs. 3 and 4) of the processing surface 35 of the roll 32 applied to the inner end surface of the caulking section 18 in the axial direction can be efficiently received (a strong reaction force shown by an arrow Y in Figs. 3 and 4 is generated) by the inner ring 9 formed of bearing steel having high hardness from the start of the rotary forging. Accordingly, large stress is generated in the portion of the inner end surface of the caulking section 18 in the axial direction that presses the processing surface 35 of the roll 32 from the start of the rotary forging, the convex sections 33 and 33 that constitute the processing surface 35 can easily bite into the inner end surface of the caulking section 18 in the axial direction, and the hub-side face spline 19 can be efficiently formed.

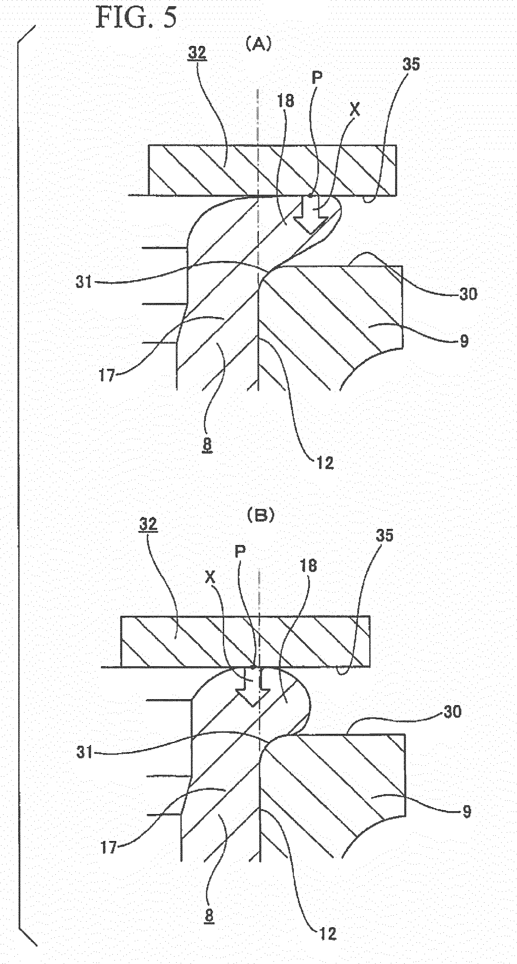

Parts (A) and (B) of Fig. 5 show two comparative examples (Comparative example 1 and Comparative example 2) of the method of manufacturing the wheel supporting rolling bearing unit.

In Comparative example 1 shown in part (A) of Fig. 5, like the example in Figs. 3 and 4, the contact portion P between the inner end surface of the caulking section 18 in the axial direction and the processing surface 35 of the roll 32 at the beginning of the rotary forging using the roll 32 is made to overlap the inner ring 9 in the axial direction. However, in the case of Comparative example 1, unlike the example in Figs. 3 and 4, the rotary forging is started in a state in which a gap is formed between the caulking section 18 and the flat surface section 30 while the caulking section 18 does not come in contact with the flat surface section 30 that is the inner end surface of the inner ring 9 in the axial direction. In Comparative example 1, some of the pressing force {a force shown by the arrow X in part (A) of Fig. 5} of the processing surface 35 of the roll 32 applied to the inner end surface of the caulking section 18 in the axial direction is consumed to eliminate the gap after the start of the rotary forging. Accordingly, in the meantime, a large stress in the portion of the inner end surface of the caulking section 18 in the axial direction that presses the processing surface 35 of the roll 32 cannot be generated, and the convex sections 33 and 33 that constitute the processing surface 35 of the roll 32 cannot easily bite into the inner end surface of the caulking section 18 in the axial direction. As a result, in comparison with the example in Figs. 3 and 4, forming efficiency of the hub-side face spline 19 is decreased.

In Comparative example 2 shown in part (B) of Fig. 5, like the example in Figs. 3 and 4, the rotary forging using the roll 32 is started in a state in which the caulking section 18 comes in contact with the flat surface section 30 that is the inner end surface of the inner ring 9 in the axial direction and the chamfer 31 adjacent to the inner side in the radial direction. However, in the case of Comparative example 2, unlike the example in Figs. 3 and 4, the contact portion P between the inner end surface of the caulking section 18 in the axial direction and the processing surface 35 of the roll 32 at the beginning of the rotary forging is disposed further inward in the radial direction than the inner circumferential surface of the inner ring 9 (does not overlap the contact portion between the caulking section 18 and the flat surface section 30 and the chamfer 31 of the inner ring 9 in the axial direction). In the case of Comparative example 2, the pressing force {a force shown by an arrow X in part (B) of Fig. 5} of the processing surface 35 of the roll 32 applied to the inner end surface of the caulking section 18 in the axial direction is consumed such that some of the pressing force plastically deforms the portion of the hub main body 8 disposed further inside in the axial direction than the caulking section 18 after the start of at least the rotary forging without being efficiently received by the inner ring 9 formed of bearing steel having high hardness. Accordingly, in the meantime, a large stress in the portion of the inner end surface of the caulking section 18 in the axial direction that presses the processing surface 35 of the roll 32 cannot be generated, and the convex sections 33 and 33 that constitute the processing surface 35 of the roll 32 cannot easily bite into the inner end surface of the caulking section 18 in the axial direction. As a result, in comparison with the case in Figs. 3 and 4, forming efficiency of the hub-side face spline 19 is decreased.

### [Second example of embodiment]

A second example of the embodiment will be described with reference to Fig. 6. In the case of the example, the rotary forging for forming the hub-side face spline 19 on the inner end surface of the caulking section 18 (see Figs. 1 to 4) in the axial direction is performed under a condition in which a processing stroke has a predetermined value that is previously determined. For this reason, in the case of the example, under the above-mentioned condition, a relation as shown in the example in Fig. 6 established between an initial caulking section thickness T (an initial thickness, see Figs. 3 and 4) that is a thickness in the axial direction of the portion of the caulking section 18 before the start of the rotary forging and disposed further inward in the axial direction than the inner end surface (the flat surface section 30) of the inner ring 9 in the axial direction and a tooth depth of the hub-side face spline 19 after termination of the rotary forging is examined by previously performing experiments. Then, when the rotary forging is performed under the above-mentioned condition, the initial caulking section thickness T that is needed to form a hub-side face spline 19 having a predetermined tooth depth is determined using the relation. That is, the caulking section 18 is formed to have the initial thickness T that is set according to a design value of the tooth depth of the face spline 19. In the case of the manufacturing method of the above-mentioned example, the hub-side face spline 19 having the desired tooth depth can be precisely formed. The other configurations and actions are the same as in the case of the first example of the above-mentioned embodiment.

Next, experiments will be described. In the experiments, in the embodiment shown in Figs. 1 to 4 and Comparative examples 1 and 2 shown in parts (A) and (B) of Fig. 5, work of performing the rotary forging for forming the hub-side face spline 19 on the inner end surface of the caulking section 18 (see Figs. 1 to 5) in the axial direction was performed under a condition in which the processing strokes were previously determined to predetermined values, and tooth depths of the hub-side face spline 19 after termination of the work were measured. Further, the work was performed a plurality of times when varying positions in the radial direction of the contact portion P between the inner end surface of the caulking section 18 in the axial direction and the processing surface 35 of the roll 32 at the beginning of the rotary forging.

Results of the experiments are shown in Fig. 7. From the results, in the case of the examples, it will be appreciated that the tooth depth of the hub-side face spline 19 can be further increased, i.e., the hub-side face spline 19 can be more efficiently formed than in the cases of Comparative examples 1 and 2.

### [Reference Signs List]

- 1: Wheel supporting rolling bearing unit (wheel supporting bearing unit)
- 2: Outer ring for a constant velocity joint
- 3: Outer ring
- 4: Hub
- 5: Rolling element
- 6: Standstill-side flange
- 7a, 7b: Outer ring track
- 8: Hub main body
- 9: Inner ring
- 10: Rotation-side flange
- 11a, 11b: Inner ring track
- 12: Small diameter step section
- 13: Center hole
- 14: Bolt
- 15: Rod section
- 16: Small diameter section
- 17: Cylindrical portion
- 18: Caulking section
- 19: Hub-side face spline (face spline)
- 20: Mouth section
- 21: End wall section
- 22: Shaft section
- 23: Female screw section
- 24: Joint-side face spline
- 25: Male screw section
- 26: Head section
- 27: Inner ring for a constant velocity joint
- 28: Ball
- 29a, 29b: Cage
- 30: Flat surface section
- 31: Chamfer
- 32: Roll
- 33: Convex section (processing teeth)
- 34: Concave section
- 35: Second surface (processing surface)
- 41: Inner circumferential surface
- 45: First surface
- 100: Swing press mechanism

## Claims

1. A method of manufacturing a wheel supporting bearing unit, the method comprising:
a process of forming a caulking section on a hub main body on which an inner ring is fitted, wherein the caulking section is formed by plastically deforming a cylindrical portion formed on an inner end portion of the caulking section in an axial direction outward in a radial direction, the inner ring has an inner end surface in the axial direction that is a flat surface section perpendicular to a central axis, the flat surface section and an inner circumferential surface of the inner ring are continuous with each other via a chamfer, and the caulking section comes in contact with the flat surface section and the chamfer; and
a process of forming a hub-side face spline that is a concavo-convex section in a circumferential direction formed on the inner end surface of the caulking section in the axial direction after the caulking section is formed, wherein a roll is rotated about a central axis of the hub main body in a state in which a processing surface, that is a concavo-convex surface in the circumferential direction, formed on a tip surface of the roll in the axial direction having a central axis inclined with respect to the central axis of the hub main body is pressed against the inner end surface of the caulking section in the axial direction, and the hub-side face spline is formed on the inner end surface of the caulking section in the axial direction by performing rotary forging of freely rotating the roll about the central axis of the roll on the basis of engagement between the processing surface of the roll and the inner end surface of the caulking section in the axial direction,
wherein the rotary forging is started in a state in which the caulking section is made to come in contact with the flat surface section and the chamfer of the inner ring, and a contact portion between the inner end surface of the caulking section in the axial direction and the processing surface of the roll at the beginning of the rotary forging is made to overlap a contact portion between the caulking section and the flat surface section and the chamfer of the inner ring in the axial direction.

2. The method of manufacturing a wheel supporting bearing unit according to claim 1,
wherein a relation established between an initial caulking section thickness that is a thickness in the axial direction of a portion of the caulking section disposed further inward in the axial direction than the flat surface section of the inner ring before the start of the rotary forging and a tooth depth of the hub-side face spline after termination of the rotary forging is previously examined under a condition in which a relative displacement of the hub main body in the axial direction between the hub main body and the roll from the start to the termination of the rotary forging is set as a predetermined value, and when the rotary forging is performed under the condition, the initial caulking section thickness that is needed to form the hub-side face spline having a desired tooth depth is determined using the relation.

3. A method of manufacturing a wheel supporting bearing unit, the method comprising:
a process of setting a hub main body on which an inner ring is fitted on a swing press mechanism;
a process of forming a caulking section on an end portion of the hub main body in an axial direction by a press using a first surface such that the hub main body is caulked with respect to the inner ring; and
a process of forming a face spline on the end portion of the hub main body on which the caulking section is formed by a swing press using a second surface, wherein a press position at which the second surface first comes in contact with the hub main body is disposed further outward in the radial direction than the inner circumferential surface of the inner ring.

4. The method of manufacturing a wheel supporting bearing unit according to claim 3,
wherein the caulking section is formed to have an initial thickness that is set according to a design value of a tooth depth of the face spline.

5. A method of manufacturing a vehicle, the method comprising a process of manufacturing a wheel supporting bearing unit using the manufacturing method according to any one of claims 1 to 4.

6. An apparatus for manufacturing a wheel supporting bearing unit, the apparatus comprising:
a first surface for caulking;
a second surface having teeth for processing a face spline; and
a swing press mechanism having a first mode of forming a caulking section on an end portion of a hub main body in an axial direction by a press using the first surface such that the hub main body on which an inner ring is fitted is caulked with respect to the inner ring, and a second mode of forming a face spline on the end portion of the hub main body on which the caulking section is formed by a swing press using the second surface, wherein a press position at which the second surface first comes in contact with the hub main body is disposed further outward in the radial direction than the inner circumferential surface of the inner ring.
